# EUROPÄISCHE PATENTSCHRIFT

(11) **EP 0 983 965 B1**
(45) Veröffentlichungstag und Bekanntmachung des Hinweises auf die Patenterteilung: **30.10.2002**
(21) Anmeldenummer: 99115169.7
(22) Anmeldetag: 13.08.1999
(51) Int. Cl.: C01B 21/20

(54) **Verfahren und Vorrichtung zur Herstellung von Distickstoffpentoxid**
Process and apparatus for preparing dinitrogen pentoxide
Procédé et dispositif pour la préparation de pentoxyde nitreux

(30) Priorität: 02.09.1998 DE 19840018
(43) Veröffentlichungstag der Anmeldung: 08.03.2000
(73) Patentinhaber: Fraunhofer-Gesellschaft zur Förderung der angewandten Forschung e.V., 80636 München (DE)
(72) Erfinder: Frenck, Christian, 76227 Karlsruhe (DE); Janitschek, Wieland, 76187 Karlsruhe (DE)

(56) Entgegenhaltungen:
- WO-A-92/02452
- WO-A-96/19424
- CHEMICAL ABSTRACTS, vol. 124, no. 24, 10. Juni 1996 (1996-06-10) Columbus, Ohio, US; abstract no. 320804, DEVENDORF, T. E. ET AL: "Pilot-plant-scale continuous manufacturing of solid dinitrogen pentoxide" XP002125884 & ACS SYMP. SER. (1996), 623(NITRATION), 68-77 ,1996,
- DATABASE WPI Section Ch, Week 198441 Derwent Publications Ltd., London, GB; Class H03, AN 1984-255009 XP002125885 & SU 1 071 867 A (GAS PROCESS RES PLN), 7. Februar 1984 (1984-02-07)

## Beschreibung

Die Erfindung betrifft ein Verfahren zur Herstellung von Distickstoffpentoxid durch Oxidation von Stickstoffdioxid mit Ozon, eine Vorrichtung zur Durchführung des Verfahrens sowie eine Mischkammer als Teil der Vorrichtung.

Es ist bekannt, Distickstoffpentoxid (N₂O₅) durch Oxidation von Stickstoffdioxid (NO₂), welches im Gleichgewicht mit Distickstofftetroxid (N₂O₄) vorliegt, mit Ozon herzustellen.

In A.D. Harris et al., Inorganic Synthesis 9 (1967), Seite 83 bis 88 ist eine Laboranlage für die Ozonisierung von NO₂ beschrieben. Die Anlage besteht im wesentlichen aus einer mit Methanol/Trockeneis-Mischung gekühlten ersten Kühlfalle, an die sich eine wassergekühlte Füllkörperkolonne sowie zwei weitere, mit Methanol/Trockeneis-Mischung gekühlte Kühlfallen anschließen. NO₂ wird dem Gasbehälter mittels eines Nadelventils als langsamer Gasstrom entnommen und im Inneren der beiden konzentrischen Rohre, welche die erste Kühlfalle bilden, mit einem senkrecht zu diesem geführten ozonhaltigen Sauerstoffstrom gemischt. Die Gasmischung wird in der ersten Kühlfalle vorgekühlt und durchläuft die Füllkörperkolonne. Die gasförmigen Produkte werden anschließend in den nachfolgenden Kühlfallen als weißer Feststoff, der mit NO₂ verunreinigt sein kann, auskondensiert.

Das vorstehend beschriebene Verfahren weist verschiedene Nachteile auf. So wird durch die Kühlung der Gasmischung die Reaktionsgeschwindigkeit herabgesetzt. Wegen des großen Rohrdurchmessers findet nur eine unzureichende Durchmischung der Reaktanten in dem aus den NO₂- bzw. ozonhaltigen Gasströmen gebildeten Kreuzstrom statt. Durch die Vermischung und Umsetzung der Reaktanten in mehreren hintereinander geschalteten Rohren mit großen Durchmessern findet eine nur unzureichende Trennung von Mischzone und Reaktionszone statt, wodurch eine technische Auslegung des Reaktors erschwert wird. Ferner wird durch die Vorkühlung NO₂ zusammen mit bereits gebildetem N₂O₅ teilweise auskondensiert. Durch das vorzeitige Auskondensieren von NO₂ wird das vorhandene Ozon nicht vollständig ausgenutzt.

In T. E. Darendorf und J. R. Stacy, ACS Symposium Series 623, Washington D. C. 1996, Seiten 68 bis 74, ist eine Pilotanlage für die Ozonisierung von NO₂ in technischem Maßstab beschrieben. Kernstück dieser Anlage ist ein Strömungsreaktor aus einem Kugelkühler als äußerem Rohr, in das ein konzentrisches, sich an seinem Ende verjüngendes inneres Rohr hineinragt. Durch die konzentrischen Rohre strömen eine Ozon/Sauerstoff-Mischung einerseits und reines NO₂ andererseits im Gleichstrom, wobei die Vermischung durch die durch die kugelförmigen Erweiterungen des Strömungsreaktors induzierten Turbulenzen gefördert werden soll. Wegen des großen Duchmessers des äußeren Rohres an der Einspeisungsstelle ist auch hier mit relativ langen Mischzeiten zu rechnen. Auch ist die Konstruktion der Anlage ist wegen der Form des Strömungsreaktors aufwendig.

Die beschriebenen Apparaturen weisen den grundsätzlichen Nachteil auf, daß sie hinsichtlich des wirtschaftlichen Einsatzes von Energie und Rohstoffen im großtechnischen Maßstab nicht optimiert sind.

Der Erfindung liegt die Aufgabe zugrunde, eine einfache, reaktionstechnisch optimierte Anlage zur Herstellung von N₂O₅ aus NO₂ und Ozon bereitzustellen, welche die Herstellung von N₂O₅ in technischem Maßstab erlaubt. Insbesondere ist es Aufgabe der Erfindung, die bei der NO₂-Dosierung, der Vermischung der Reaktanten und der Temperaturführung der Reaktion auftretenden Probleme zu lösen.

Gelöst wird die Aufgabe durch ein Verfahren zur Herstellung von N₂O₅ durch Oxidation von NO₂ mit Ozon mit den Schritten
a) Erzeugen eines Hauptgasstromes enthaltend Ozon;
b) Erzeugen eines Nebengasstromes enthaltend NO₂;
c) Einspeisen des Nebengasstromes in den Hauptgasstrom, wobei ein Gesamtgasstrom gebildet wird;
d) Durchleiten des Gesamtgasstromes durch einen Strömungsreaktor, wobei NO₂ mit Ozon reagiert;
e) Abscheiden von gebildetem N₂O₅.

Das erfindungsgemäße Verfahren ist dadurch gekennzeichnet, daß in einer Mischkammer der Nebengasstrom in den Hauptgasstrom in einem Winkel von 10-170° zum Hauptgasstrom eingespeist wird, wobei der Strömungsquerschnitt des Hauptgasstromes derart vor der Einspeisungsstelle des Nebengasstromes in den Hauptgasstrom verringert wird, daß die Strömungsgeschwindigkeit des Hauptgasstromes an der Einspeisungsstelle erhöht ist.

Durch die Verringerung des Strömungsquerschnittes des Hauptgasstromes wird die Strömungsgeschwindigkeit des Hauptgasstromes erhöht. Durch den resultierenden hohen Impuls des Hauptgasstromes erfolgt beim Zusammentreffen von Hauptgasstrom und Nebengasstrom eine effektive Durchmischung der beiden Gasströme, wobei sehr kurze Mischzeiten realisiert werden. Wesentlich für die effektive Durchmischung ist die Relativgeschwindigkeit beider Gasströme. Die Durchmischung ist um so besser, je höher die Geschwindigkeit des Hauptgasstromes gegenüber der des Nebengasstromes ist. Die Strömungsgeschwindigkeit des Hauptgasstromes ergibt sich aus dessen Volumenstrom und der Querschnittsfläche. Im allgemeinen wird der Strömungsquerschnitt des Hauptgasstromes um mindestens einen Faktor 2, bevorzugt um mindestens einen Faktor 4, besonders bevorzugt um einen Faktor 4 bis 25, insbesondere um einen Faktor 9 bis 16 verringert. Die Relativgeschwindigkeit von Hauptgasstrom und Nebengasstrom in Hauptgasstromrichtung beträgt dabei an der Einspeisungsstelle im allgemeinen mindestens 10 m/sec, bevorzugt mindestens 20 m/sec, besonders bevorzugt 20 bis 100 m/sec. Die Verringerung des Strömungsquerschnittes des Hauptgasstroms erfolgt vorzugsweise kurz vor der Einspeisungsstelle des Nebengasstromes in den Hauptgasstrom, vorzugsweise in einem Abstand von maximal dem 10- fachen, besonders bevorzugt von maximal dem 3-fachen des verringerten Strömungsquerschnittes.

Der Nebengasstrom wird in einem Winkel zum Hauptgasstrom eingespeist. Dieser Winkel beträgt im allgemeinen 10 ― 170°, bevorzugt 30 ― 150, besonders bevorzugt 60 ― 120°, insbesondere bevorzugt 60 ― 90° und speziell ca. 90°.

Nachstehend wird eine Mischkammer beschrieben, die in dem erfindungsgemäßen Verfahren eingesetzt werden kann. Diese Mischkammer weist in winkliger Anordnung eine erste Zuleitung für einen Hauptgasstrom, eine zweite Zuleitung für einen Nebengasstrom und eine Ableitung für einen Gesamtgasstrom auf und ist dadurch gekennzeichnet, daß die erste Zuleitung vor der zweiten Zuleitung eine Einrichtung aufweist, durch die der Querschnitt der ersten Zuleitung verringert wird. Im allgemeinen wird der Querschnitt der ersten Zuleitung um mindestens einen Faktor 2, bevorzugt um mindestens einen Faktor 4, besonders bevorzugt um einen Faktor 4 bis 25, insbesondere um einen Faktor 9 bis 16 verringert. Die Verringerung des Querschnitts kann stetig oder unstetig erfolgen. Stetig wird der Querschnitt der Zuleitung beispielsweise durch eine Einrichtung verringert, die die Form einer Düse hat. Unstetig wird der Querschnitt der Zuleitung beispielsweise durch eine Einrichtung verringert, die die Form einer Blende hat. Die Blende kann eine oder mehrere Öffnungen beliebiger Geometrie aufweisen, bevorzugt ist eine Blende mit mindestens einer kreisrunden Öffnung.

Hinter der Einrichtung zur Querschnittsverringerung erweitert sich die erste Zuleitung unstetig in eine Mischkammer. Vorzugsweise beträgt der Abstand zwischen dem Ende der Einrichtung zur Querschnittsverringerung und der Einspeisungsstelle des Nebengasstroms in den Hauptgasstrom, an der sich Hauptgasstrom und Nebengasstrom in der Mischkammer kreuzen, maximal das 10-fache, bevorzugt das 5-fache, besonders bevorzugt das 3-fache des verringerten Querschnitts der ersten Zuleitung.

Die Mischkammer weist die erste Zuleitung, die zweite Zuleitung und die Ableitung in einer winkligen Anordnung auf, wobei die erste und die zweite Zuleitung im allgemeinen in einem Winkel von 10 ― 170°, vorzugsweise von 30 ― 150°, besonders bevorzugt von 60 ― 120, insbesondere von 60 ― 90° und speziell im wesentlichen senkrecht zueinander angeordnet sind und die erste Zuleitung und die Ableitung im wesentlichen in einem Winkel von 180° angeordnet sind. Neben der bevorzugten T-förmigen Geometrie der Zu- bzw. Ableitungen können jedoch auch andere Geometrien, beispielsweise ein Y-förmige Geometrie, verwirklicht sein, wobei die erste und die zweite Zuleitung dabei einen Winkel von im allgemeinen 60 ― 120 ° bevorzugt ca. 90°, einnehmen.

In einer besonders bevorzugten Ausführungsform wird die Mischkammer aus der ersten Zuleitung, der zweiten Zuleitung und der Ableitung gebildet, wobei insbesondere eine Geometrie bevorzugt ist, bei der die erste Zuleitung und die zweite Zuleitung im wesentlichen in einem Winkel von 90° und die erste Zuleitung und die Ableitung im wesentlichen in einem Winkel von 180° zueinander angeordnet sind.

In einer weiterhin bevorzugten Ausführungsform weisen die erste Zuleitung ohne die der Einrichtung zur Querschnittsverringerung, die zweite Zuleitung und die Ableitung im wesentlichen den gleichen Querschnitt auf. In einer insbesondere bevorzugten Ausführungsform ist die Mischkammer ein T-Stück, dessen Rohrschenkel den gleichen Durchmesser von bevorzugt 2,5 bis 25 mm haben, und die im Abstand von bevorzugt 5 bis 25 mm vom Einmündungspunkt der Rohrschenkel entfernt eine Blende mit einem Innendurchmesser von bevorzugt 1 bis 10 mm aufweist.

Durch den Einsatz der Mischkammer erfolgt eine nahezu sofortige Durchmischung der Gasströme, wodurch Mischungszone und Reaktionszone räumlich voneinander getrennt werden. Dadurch wird der Beginn der N₂O₅-Bildung räumlich klar definiert und die reaktionstechnische Optimierung der Anlage, insbesondere auch ein problemloses Scale-up der Anlage, ermöglicht.

Gegenstand der Erfindung ist auch eine Vorrichtung zur Herstellung von N₂O₅ durch Oxidation von NO₂ mit Ozon, die
- eine Einrichtung zum Verdampfen von NO₂,
- eine Einrichtung zur Erzeugung eines ozonhaltigen Hauptgasstroms,
- eine Mischkammer, wie sie vorstehend beschrieben ist,
- einen Strömungsreaktor,
- eine Einrichtung zum Abscheiden von N₂O₅,
sowie Zu- und Ableitungen zwischen den Einrichtungen der Vorrichtung aufweist.

Das erfindungsgemäße Verfahren kann wie folgt durchgeführt werden: In einem handelsüblichen Ozonisator wird ein ozonhaltiger Gasstrom erzeugt und der Mischkammer als Hauptgasstrom zugeleitet. Der ozonhaltige Gasstrom enthält im allgemeinen 0,1 bis 10 Vol-% Ozon, die vorzugsweise in reinem Sauerstoff als Trägergas vorliegen. Die Erzeugung eines NO₂-haltigen Nebengasstroms erfolgt vorzugsweise, indem ein handelsüblicher NO₂-Gasdruckbehälter mittels einer Heizvorrichtung auf eine Temperatur von vorzugsweise bis zu 30°C erwärmt und dadurch flüssiges NO₂ verdampft wird. Dadurch entsteht in dem Behälter ein Druck, der eine gleichmäßige Dosierung des NO₂-Stroms ermöglicht. Der NO₂-Strom kann mit Hilfe eines handelsüblichen Feinventils exakt dosiert werden. Der Einsatz eines Trägergasstroms zum Transport und zur Dosierung von NO₂ kann dadurch entfallen. Vorzugsweise wird der NO₂-haltige Nebengasstrom ohne Einsatz eines Trägergases allein durch Verdampfen von NO₂ erzeugt.

Im Anschluß an die Mischkammer erfolgt die Reaktion von NO₂ mit Ozon zu N₂O₅ in einem Strömungsreaktor. Der Strömungsreaktor kann beispielsweise ein Rohroder Rohrbündelreaktor sein. Vorzugsweise erfolgt die Reaktion von NO₂ mit Ozon unter turbulenten Strömungsbedingungen. Die Strömungsbedingungen können - bei gegebenem Durchmesser des Rohrreaktors - durch Wahl der Strömungsgeschwindigkeit eingestellt werden. Die Strömungsverhältnisse in einem Rohrreaktor werden durch die Reynoldszahl charakterisiert. Im allgemeinen ist bei dem erfindungsgemäßen Verfahren die Reynolds-Zahl der reaktiven Strömung > 2300, bevorzugt > 5000, besonders bevorzugt > 10000. Durch diese Strömungsverhältnisse besteht eine Pfropfenströmung, durch die eine Rückvermischung von Reaktanten und Produkten ausgeschlossen ist. Dadurch wird eine möglichst hohe Konzentration der Reaktanten NO₂ und Ozon aufrechterhalten und eine höhere Reaktionsgeschwindigkeit und Ausbeute an N₂O₅ erreicht.

Ozon und NO₂ werden vorzugsweise in stöchiometrischen Mengen, d. h. im Molverhältnis von 1:2, eingesetzt.

Die Reaktion kann adiabat oder polytrop durchgeführt werden. Bei polytroper Reaktionsführung kann die Temperaturlenkung über ein Mantelrohr, in dem ein Kühlmedium zirkuliert, erfolgen. Die Reaktionstemperatur im Strömungsrohr beträgt im allgemeinen 22 bis 140°C, bevorzugt von 30 bis 130°C, besonders bevorzugt 40 bis 100°C. Einer Temperaturerhöhung über die gewünschte Reaktionstemperatur hinaus kann dadurch entgegengewirkt werden, daß die Ozonkonzentration im dem Strömungsreaktor herabgesetzt wird. Dies kann beispielsweise dadurch erfolgen, daß ein Teil des aus dem Reaktor austretenden Gasstroms nach Abscheidung von N₂O₅ mittels eines Kompressors in den ozonhaltigen Sauerstoffstrom (Hauptgasstrom) vor der Mischkammer zurückgeführt wird.

Aus dem Gasstrom wird anschließend gebildetes N₂O₅ abgeschieden. Vorzugsweise wird gebildetes N₂O₅ bei einer Temperatur von -80°C bis -30°C in einem sich an den Strömungsreaktor anschließenden Desublimator als Feststoff abgeschieden. Durch Erwärmen auf eine Temperatur von vorzugsweise -30°C bis +30°C verdampft gegebenenfalls nicht umgesetztes N₂O₄ und man erhält sehr reines festes N₂O₅, das sich unterhalb von 0°C lagern läßt.

Unter Verwendung zweier Desublimatoren im Wechselbetrieb läßt sich das Verfahren kontinuierlich durchführen.

In dem erfindungsgemäßen Verfahren wird NO₂ auch in Gegenwart von nur stöchiometrischen Mengen von Ozon nahezu vollständig umgesetzt. So beträgt die N₂O₅-Ausbeute unter Verwendung stöchiometrischer Ozonmengen - sofern eine Reaktionstemperatur von 140°C im Reaktor nicht überschritten wird - im allgemeinen > 97 %, bevorzugt bis zu 99%. Der nahezu vollständige Umsatz der nur in stöchiometrischen Mengen eingesetzten Reaktanten gewährleistet eine optimale Ausnutzung von Energie und Rohstoffen.

### Beispiel

Eine Versuchsanlage besteht aus einer Mischkammer aus Glas in Form eines T-Stückes mit einer lichten Weite von 6 mm, in dem sich im Abstand von 18 mm vom Kreuzungspunkt der Rohrschenkel des T-Stückes eine Blende mit einem Innendurchmesser von 2 mm befindet. Auf das T-Stück ist ein PTFE-Rohr von 2,1 m Länge und 6 mm lichter Weite als Strömungsreaktor aufgesteckt. Das PTFE-Rohr ist an einen 1 m langen Desublimator mit einem Durchmesser von 20 cm angeschlossen. In einem Ozonisator wird bei einem Sauerstoffdurchsatz von ca. 1 m³/Stunde ein ozonhaltiger Sauerstoffstrom mit einem Ozongehalt von ca. 3,5 Gew.-% erzeugt und in die Mischkammer eingespeist. Ein handelsüblicher NO₂-Gasdruckbehälter wird mittels Heizband auf 30°C erwärmt und mit einem Feinventil ein NO₂-Dampfstrom, der einem Verbrauch von 12 ml/h flüssigem N₂O₄ entspricht, eingestellt und in die Mischkammer eingespeist. Im Anschluß an die Mischkammer erfolgt die exotherme Reaktion, wobei die Reaktionswärme über die Rohrwand an die Umgebung abgegeben wird. Es stellt sich eine maximale Reaktionstemperatur von 70°C ein. In dem Desublimator werden bei -80°C an den Gefäßwandungen kontinuierlich Produktristalle abgeschieden. Der aus dem Desublimator austretende Gasstrom weist noch einen Ozongehalt von ca. 2% des Eingangsstromes auf. Nach 8 Stunden wird die Gaszuführung unterbrochen und der Desublimator unter Aufrechterhaltung des Ozon/Sauerstoff-Stromes auf eine Temperatur von 20°C erwärmt. Dabei fällt N₂O₅ in ein an den Desublimator angeschlossenes Vorratsgefäß. Es werden ca. 200 g N₂O₅ erhalten.

## Patentansprüche

1. Verfahren zur Herstellung von N₂O₅ durch Oxidation von NO₂ mit Ozon mit den Schritten
a) Erzeugen eines Hauptgasstromes enthaltend Ozon;
b) Erzeugen eines Nebengasstromes enthaltend NO₂;
c) Einspeisung des Nebengasstromes in den Hauptgasstrom, wobei ein Gesamtgasstrom gebildet wird;
d) Durchleiten des Gesamtgasstromes durch einen Strömungsreaktor, wobei NO₂ mit Ozon reagiert;
e) Abscheiden von gebildetem N₂O₅,
**dadurch gekennzeichnet, daß** in einer Mischkammer der Nebengasstrom in den Hauptgasstrom in einem Winkel von 10 - 170° zum Hauptgasstrom eingespeist wird, wobei der Strömungsquerschnitt des Hauptgasstromes derart vor der Einspeisungsstelle des Nebengasstromes in den Hauptgasstrom verringert wird, daß die Strömungsgeschwindigkeit des Hauptgasstromes an der Einspeisungsstelle erhöht wird.

2. Verfahren nach Anspruch 1, **dadurch gekennzeichnet, daß** der Strömungsquerschnitt des Hauptgasstromes um mindestens einen Faktor 4 verringert wird.

3. Verfahren nach einem der Ansprüche 1 oder 2, **dadurch gekennzeichnet, daß** die Relativgeschwindigkeit von Hauptgasstrom und Nebengasstrom in Hauptgasstromrichtung an der Einspeisungsstelle mindestens 20 m/sec beträgt.

4. Verfahren nach einem der Ansprüche 1 bis 3, **dadurch gekennzeichnet, daß** die Reaktion von NO₂ mit Ozon in einer Pfropfenströmung erfolgt.

5. Verfahren nach einem der Ansprüche 1 bis 4, **dadurch gekennzeichnet, daß** der Nebengasstrom ohne Einsatz eines Trägergases durch Verdampfen von NO₂ erzeugt wird.

6. Vorrichtung zur Herstellung von N₂O₅ durch Oxidation von NO₂ mit Ozon, die
- eine Einrichtung zum Verdampfen von NO₂ zur Erzeugung eines NO₂ enthaltenden Nebengasstromes,
- eine Einrichtung zur Erzeugung eines ozonhaltigen Gasstromes als Hauptgasstrom,
- eine Mischkammer mit einer ersten Zuleitung für den Hauptgasstrom und einer zweiten Zuleitung zur Einspeisung des Nebengasstromes in den Hauptgasstrom in einem Winkel von 10 - 170° zur Richtung des Hauptgasstromes und einer Ableitung für den gebildeten Gesamtgasstrom und einer Einrichtung zur Querschnittsverringerung der ersten Zuleitung vor der Einspeisungsstelle,
- einen Strömungsreaktor,
- eine Einrichtung zum Abscheiden von N₂O₅,
sowie Zu- und Ableitungen zwischen den Einrichtungen der Vorrichtung aufweist.

## Claims

1. Method for producing N₂O₅ by means of oxidation of NO₂ with ozone by means of the steps
a) production of a main gas flow which contains ozone;
b) production of a secondary gas flow which contains NO₂;
c) feeding the secondary gas flow into the main gas flow, a total gas flow being formed;
d) conduction of the total gas flow through a flow reactor, NO₂ reacting with ozone;
e) separation of the formed N₂O₅,
**characterised in that** the secondary gas flow is fed into the main gas flow in a mixing chamber at an angle of 10 - 170° to the main gas flow, the flow cross-section of the main gas flow being reduced before the feeding-in position of the secondary gas flow into the main gas flow in such a manner that the flow speed of the main gas flow at the feeding-in position is increased.

2. Method according to claim 1, **characterised in that** the flow cross-section of the main gas flow is reduced by at least a factor of 4.

3. Method according to one of the claims 1 or 2, **characterised in that** the relative speed of the main gas flow and secondary gas flow in the main gas flow direction at the feeding-in position is at least 20 m/sec.

4. Method according to one of the claims 1 to 3, **characterised in that** the reaction of NO₂ with ozone is effected in a plug flow.

5. Method according to one of the claims 1 to 4, **characterised in that** the secondary gas flow is produced without use of a carrier gas by means of evaporation of NO₂.

6. Device for producing N₂O₅ by means of oxidation of NO₂ with ozone which has
- a mechanism for evaporating NO₂ in order to produce a secondary gas flow which contains NO₂,
- a mechanism for producing an ozone-containing gas flow as main gas flow,
- a mixing chamber with a first supply line for the main gas flow and a second supply line for feeding the secondary gas flow into the main gas flow at an angle of 10 - 170° to the direction of the main gas flow and with a discharge line for the formed total gas flow and with a mechanism for reducing the cross-section of the first supply line before the feeding-in position,
- a flow reactor,
- a mechanism for separating N₂O₅,
and supply and discharge lines between the mechanisms of the device.

## Revendications

1. Procédé de préparation de N₂O₅ par oxydation de NO₂ avec de l'ozone, comportant les étapes suivantes :
a) production d'un courant gazeux principal contenant de l'ozone :
b) production d'un courant gazeux secondaire contenant NO₂ ;
c) introduction du courant gazeux secondaire dans le courant gazeux principal, avec formation d'un courant gazeux global ;
d) passage du courant gazeux global à travers un réacteur d'écoulement, dans lequel NO₂ réagit avec l'ozone ;
e) séparation du N₂O₅ formé,
**caractérisé en ce qu'**
on introduit dans une chambre de mélange le courant gazeux secondaire dans le courant gazeux principal selon un angle compris entre 10 et 170° par rapport au courant gazeux principal, la section d'écoulement du courant gazeux principal étant diminuée avant l'endroit d'introduction du courant gazeux secondaire dans le courant gazeux principal de manière que la vitesse d'écoulement du courant gazeux principal à l'endroit d'introduction soit accrue.

2. Procédé selon la revendication 1,
**caractérisé en ce que**
la section d'écoulement du courant gazeux principal est diminuée d'au moins un facteur 4.

3. Procédé selon l'une des revendications 1 ou 2,
**caractérisé en ce que**
la vitesse relative du courant gazeux principal et du courant gazeux secondaire dans la direction du courant gazeux principal à l'endroit d'introduction s'élève à au moins 20 m/sec.

4. Procédé selon l'une des revendications 1 à 3,
**caractérisé en ce que**
la réaction de NO₂ avec l'ozone s'effectue dans un écoulement tampon.

5. Procédé selon l'une des revendications 1 à 4,
**caractérisé en ce que**
le courant gazeux secondaire est produit sans utilisation d'un gaz support par vaporisation de NO₂.

6. Dispositif de préparation de NO₂O₅ par oxydation de NO₂ avec de l'ozone, qui présente
- un dispositif de vaporisation de NO₂ pour produire un courant gazeux secondaire contenant du NO₂,
- un dispositif de production de courant gazeux contenant de l'ozone comme courant gazeux principal.
- une chambre de mélange avec une première canalisation d'entrée pour le courant gazeux principal et une seconde canalisation d'entrée pour introduire le courant gazeux secondaire dans le courant gazeux principal selon un angle de 10 à 170° par rapport à la direction du courant gazeux principal et une canalisation d'abduction pour le courant gazeux global formé ainsi qu'un dispositif pour diminuer la section de la première canalisation d'introduction avant l'endroit d'introduction.
- un réacteur à écoulement,
- un dispositif pour séparer N₂O₅,
ainsi que des canalisations d'entrée et de départ entre les dispositifs de l'appareil.
